# EUROPÄISCHE PATENTSCHRIFT

(11) **EP 1 004 001 B1**
(45) Veröffentlichungstag und Bekanntmachung des Hinweises auf die Patenterteilung: **05.03.2003**
(21) Anmeldenummer: 98940226.8
(22) Anmeldetag: 14.07.1998
(51) Int. Cl.: F28D 20/00

(54) **SORPTIONSSPEICHER, ANORDNUNG UND VERFAHREN ZUR SPEICHERUNG VON WÄRME**
SORPTION TRAP ARRANGEMENT AND METHOD FOR STORING HEAT
ACCUMULATEUR A SORPTION, DISPOSITIF ET PROCEDE D'ACCUMULATION DE CHALEUR

(30) Priorität: 13.08.1997 DE 19758427; 20.08.1997 DE 19736259; 11.11.1997 DE 19749866; 08.01.1998 DE 19800442; 16.03.1998 DE 19811302
(43) Veröffentlichungstag der Anmeldung: 31.05.2000
(73) Patentinhaber: SorTech AG, 79108 Freiburg (DE)
(72) Erfinder: HENNING, Hans-Martin, D-79100 Freiburg (DE); MITTELBACH, Walter, D-79111 Freiburg (DE)
(74) Vertreter: Kruspig, Volkmar, Dipl.-Ing.
(86) Internationale Anmeldenummer: EP9804387
(87) Internationale Veröffentlichungsnummer: WO99009365

(56) Entgegenhaltungen:
- EP-A- 0 091 095
- EP-A- 0 216 237
- WO-A-85/05170
- CH-A- 609 140
- US-A- 4 479 364
- US-A- 5 005 371

## Beschreibung

Die Erfindung betrifft einen Sorptionsspeicher gemäß Oberbegriff des Patentanspruchs 1 sowie eine Anordnung und ein Verfahren zur Speicherung von Wärme.

In bekannten Wärmespeichern wird heißes Wasser gespeichert oder die insbesondere über heißes Wasser zugeführte Wärmeenergie wird zur Aufheizung eines im Wärmespeicher befindlichen Speichermaterials verwendet. Um eine unerwünschte Wärmeabgabe an die Umgebung des Wärmespeichern zu verringern, ist eine Wärmeisolierung vorgesehen.

Aufgrund ihrer geringeren Speicherkapazität und ihrer nicht befriedigenden Wärmeisolierung sind die bekannten Wärmespeicher nicht in ausreichendem Maße in der Lage, insbesondere eine während der Sommermonate zugeführte Wärmemenge zu speichern und diese während der kälteren Jahreszeit zur Raumheizung oder Brauchwassererwärmung abzugeben.

Ein Absorptionswärmespeicher ist aus der nächstliegenden Lehre nach US-PS 5,005,371 vorbekannt. Dort wird von einem evakuierten Behälter ausgegangen, welcher zur Aufnahme eines Kältemittels und von Adsorbaten geeignet ist. Ein erster Bereich des Behälters ist mit dem Sorptionsmaterial, einen Adsorber bildend versehen, wobei der zweite Bereich zur Aufnahme der kondensierten Adsorbate dient, die vom Sorptionsmaterial desorbiert werden. Problematisch ist bei der zitierten Lösung die Trennung zwischen den einzelnen Kammern des Behälters, um ein optimales Speichervermögen zu erhalten, insbesondere wenn eine großtechnische Fertigung mit vertretbaren Kosten erfolgen soll.

Eine Speicherheizanlage mit Sorptionsspeicher gemäß EP 0 091 095 A2 soll eine Langzeitspeicherung von Energie ohne wesentliche Verluste ermöglichen. Gemäß der dortigen Lösung wird Zeolith als Absorptionsmittel und Wasser als Arbeitsfluid verwendet, wobei zum Austreiben des Arbeitsfluids aus dem Absorptionsmittel eine Heizvorrichtung vorgesehen ist. Weiterhin umfaßt der Sorptionsspeicher ein zur Wärmeentnahme dienendes Wärmetauscherelement und es ist ein Arbeitsfluideinlaß sowie ein -auslaß vorhanden. Ein Vorratsgefäß nimmt das flüssige Arbeitsfluid auf und ein Kondensator ist zwischen Arbeitsfluidauslaß und dem Vorratsgefäß geschaltet. Ein Verdampfer befindet sich zwischen dem Vorratsgefäß und dem Arbeitsfluideinlaß, wobei dem Verdampfer eine mit höherwertiger Energie, insbesondere Elektrizität, Verbrennungswärme, Heißdampf oder ähnlichem gespeiste Zusatzheizvorrichtung zum Erhitzen von zu verdampfendem flüssigen Arbeitsfluid zugeordnet ist. Der Verdampfer ist unterhalb des Sorptionsspeichers befindlich, wobei die Verdampfungskammer zum Sorptionsspeicher über eine dampfdurchlässige Trennwand in Verbindung steht.

Eine Vorrichtung zum Speichern von Wärme durch Sorptionstechnik mit hermetisch verschlossenen Behältern ist auch aus der WO 85/05170 vorbekannt. Dort werden mehrere Behälter mit einer Zirkulationsleitung verbunden, um das Speichervermögen und das Laden bzw. Entladen zu verbessern. Auch dort wird ein Zeolith als Adsorptionsmaterial benutzt.

Eine Weiterbildung der bekannten diskontinuierlich arbeitenden Sorptions-Speicher mit Feststoffabsorber zeigt die EP 0 216 237 A2. Gemäß dieser Lehre sollen die mit den Ventileinrichtungen der Steuerungsorgane verbundenen Nachteile überwunden werden. So soll der Kondensator wärmegedämmt ausgebildet und die Strömungsverbindung zwischen dem primären und dem sekundären System als Wärmewiderstand ausgebildet werden. Das primäre System soll weiterhin ausschließlich durch die Steuerungsorgane des sekundären Systems gesteuert werden.

Der vorliegenden Erfindung liegt daher die Aufgabe zugrunde, einen weiterentwickelten Wärmespeicher und eine Anordnung zur Wärmespeicherung anzugeben, welche kostengünstig in Massenproduktion herstellbar sind und bei geringen Abmessungen gestatten, eine große zugeführte Wärmeenergie über einen langen Zeitraum zu speichern.

Die Aufgabe der Erfindung wird durch die in den unabhängigen Ansprüchen genannten Merkmale gelöst, wobei die Unteransprüche zweckmäßige Ausgestaltungen und Weiterbildungen umfassen.

Der Sorptionsspeicher besteht aus einem einzigen, hermetisch verschlossenen Behälter, der zumindest einen ersten und einen zweiten Bereich aufweist. In den ersten Bereich wird bei der Herstellung des erfindungsgemäßen Sorptionsspeichers Sorptionsmaterial und ein Adsorbat eingebracht. Der zweite Bereich dient zur Aufnahme kondensierten Adsorbates, das vom Sorptionsmaterial desorbiert worden ist. Vorzugsweise wird soviel Adsorbat in den Sorptionsspeicher eingebracht, daß die Menge des Adsorbates ausreicht, um den Sorptionsspeicher vollständig zu sättigen.

Beim Laden des Sorptionsspeichers führt eine externe Wärmequelle, beispielsweise Solarkollektoren, dem Sorptionsmaterial Wärmeenergie über ein oder mehrere Wärmetauscher zu. Das über die Solarkollektoren zugeführte warme oder heiße Wasser heizt das Sorptionsmaterial auf und Adsorbat desorbiert, d.h. ein Teil der zugeführten Wärmeenergie überführt flüssiges in gasförmiges Adsorbat. Vorzugsweise ist zwischen dem ersten und zweiten Bereich ein dritter Bereich vorgesehen, der ein oder mehrere Wärmetauscher aufweist, durch die kaltes Wasser fließt und an dem das gasförmige Adsorbat kondensiert. Das kondensierte Adsorbat wird dem zweiten Bereich des Sorptionsspeichers zugeführt und dort aufgefangen.

Bei der Kondensation des Adsorbates wird Wärme frei, die über den oder die Kondensationswärmetauscher einer Wärmesenke zugeführt wird. Die Wärmesenke ist beispielsweise ein Erdreich- oder Außenluftwärmetauscher und/oder eine Raumheizung und/oder ein Brauchwasserspeicher.

Die zur Desorption zugeführte Wärmemenge ist deutlich größer als die bei der Kondensation des Adsorbates freigesetzte Wärme. Die Differenz zwischen der dem Sorptionsmaterial zugeführten und von dort abgeführten Wärmemenge verbleibt im Sorptionsmaterial.

Beim Entladen des erfindungsgemäßen Sorptionsspeichers wird das flüssige, aufgefangene Adsorbat in den gasförmigen Zustand überführt, gelangt an das Sorptionsmaterial und wird von diesem adsorbiert. Bei der Adsorption des Adsorbates am Sorptionsmaterial wird Adsorptionswärme frei, die über den oder die Wärmetauscher, die mit dem Sorptionsmaterial in thermischer Verbindung stehen, einer Wärmesenke zugeführt wird.

Die Wärmesenken beim Entladen des Sorptionsspeichers sind vorzugsweise eine Raumheizung und/oder ein Brauchwasserspeicher.

Zur Überführung des flüssigen Adsorbates in den gasförmigen Zustand sind vorzugsweise ein oder mehrere Verdampferwärmetauscher und/oder Kondensatorwärmetauscher vorgesehen, denen von einer Wärmequelle Wärmeenergie zugeführt wird. Bei dem Verdampferwärmetauscher handelt es sich vorzugsweise um denselben Wärmetauscher, der, wenn er beim Laden des erfindungsgemäßen Sorptionsspeichers mit einer Wärmesenke in Verbindung steht, die Kondensation des gasförmigen, desorbierten Adsorbates fördert.

Die Wärmequellen beim Entladen des Sorptionsspeichers sind vorzugsweise Solarkollektoren und/oder ein Erdreich- und/oder ein Außenluftwärmetauscher und/oder ein Brauchwasserspeicher und/oder eine Raumheizung.

Es wird vorzugsweise Wasser als Adsorbat und Silicagel, d.h. ein Kieselgel, als Sorptionsmaterial verwendet, so daß bei der Desorption Wasserdampf entsteht.

Vorzugsweise ist der Sorptionsspeicher zumindest soweit evakuiert, daß die Restgasdrücke den Wasserdampftransport vom Verdampfer zum Adsorber nicht behindern und ist hermetisch verschlossen.

Bevorzugt ist der Adsorberwärmetauscher unmittelbar im ersten Bereich des Sorptionsspeichers angeordnet und von Sorptionsmaterial umgeben. Es kann aber auch ein Adsorberwärmetauscher verwendet werden, der den Adsorber ganz oder teilweise umschließt. Um die thermische Verbindung zwischen Sorptionsmaterial und dem Adsorberwärmetauscher bzw. dem Wärmeträgerfluid noch weiter zu verbessern, wird erfindungsgemäß vorgeschlagen, Netzrohre zu verwenden. Netzrohre bestehen aus einem Rohr und ein das Rohr umgebendes Netz. Zur Verbesserung des Wärmeübergangs vom Rohr auf eine Schüttung, die das Sorptionsmaterials ganz oder teilweise enthält, kann das Rohr und das Netz mit Wärmeleitpaste versehen werden.

Die Wärmeübertragung in der Schüttung kann durch geordnetes oder ungeordnetes Einbringen von dünnen Metallstreifen, Metalldrähten oder Metallnetzen und/oder durch die Verwendung von gut wärmeleitenden Schüttkörpern, wie z.B. Graphitfasern, verbessert werden.

Ebenso kann ein offenporiger Metall - und/oder Graphitschaum oder organische Schäume in die Schüttung eingebracht werden. Vorzugsweise erfolgt die Einbringung des Schaums in die Schüttung durch aufschäumen des verwendeten Materials innerhalb der mit Wärmeübertragerrohren versehenen Schüttung und nachträgliches Einrütteln des Sorptionsmaterials und/oder Fällung des Sorptionsmaterials aus Lösung innerhalb der durch den Schaum gebildeten Matrix.

Das Einbringen des Sorptionsmaterials in die durch den Schaum gebildete Matrix oder eine anderweitig hergestellte Matrix hat ferner den Vorteil, daß die Adsorptionswirkung des eingebrachten Sorptionsmaterials erhöht wird, da das Adsorbat so auch leichter an innen liegendes Sorptionsmaterial gelangen kann.

Nach einer Ausführungsform weist der Behälter eine Röhrenform auf und ist beispielsweise mit einem Stahlmantel versehen, insbesondere um eine ausreichende Stabilität eines evakuierten Behälters sicherzustellen. Weist der Behälters einen Stahlmantel auf, so ist es zweckmäßig, den Behälter mit einer Wärmedämmung zu versehen, um eine ungewollte Wärmeabgabe an die Umgebung zu verhindern.

Vorzugsweise wird nach einer Ausführungsform destilliertes, entmineralisiertes oder anderweitig gereinigtes Wasser als Adsorbat verwendet. Ebenso kann vorgesehen sein, mehrere Adsorbate zu verwenden, von denen eines Wasser ist. Nach einer weiteren Ausführungsform der Erfindung wird Ammoniak oder eine Ammoniakmischung als Adsorbat verwendet. Mögliche Adsorbate sind demnach Wasser, Methanol oder andere Alkohole, bzw. Ammoniak. Der besondere Vorteil bei der Verwendung von Wasser als Adsorbat besteht in der höchsten Verdampfungsenthalpie, so daß höchste Energiedichten erreichbar sind. Beim Einsatz von Methanol oder sonstigen Alkoholen ist ein höherer Dampfdruck erzielbar, d.h. an das einzusetzende Vakuumsystem können geringere Ansprüche bezüglich der Dichtigkeit gegenüber der Atmosphäre gestellt werden. Hier sind Verdampfungstemperaturen unter 0° C möglich. Der Einsatz von Methanol oder sonstigen Alkoholen als Adsorbat eignet sich vor allem zur Kältespeicherung.

Nach einer weiteren Ausführungsform besteht das Sorptionsmaterial zumindestens teilweise aus einem oder mehreren der technisch wichtigen Adsorbenzien, wie Silicagel (Kieselgel), Zeolithe, Aktivkohlen oder Aluminiumoxid (aktivierte Tonerde). Des weiteren können Salzhydrate in Reinform oder eingebettet in eine poröse Matrix, beispielsweise bestehend aus Silicagel, Adsorbenzien basierend auf Polymeren und chemisch modifizierte Adsorbenzien verwendet werden.

Das Sorptionsmaterial kann als Schüttung in pelletierter Form, als Granulat oder als Pulver, sowie als poröser Festkörper mit integriertem Wärmeübertrager eingebracht werden. Vorzugsweise wird Silicagel als Granulat oder in Form kugelartiger Pellets verwendet.

Gemäß einer weiteren Ausführungsform wird die Menge des eingeschlossenen Adsorbates oder der Adsorbate so bemessen, daß das Sorptionsmaterial damit vollständig gesättigt ist. Es versteht sich, daß auch eine geringere oder größere Menge verwendet werden kann, wenn dies aufgrund der verwendeten Sorptionsmaterialien bzw. Adsorbate zu einer Verbesserung des Wirkungsgrades des Sorptionsspeichers führt und/oder hierdurch ein stabilerer Betrieb des Sorptionsspeichers erzielbar ist.

Um eine unkontrollierte Adsorption von Kondensat aus dem Kondensator des Sorptionsspeichers am Sorptionsmaterials im Adsorber zu verhindern, ist eine Verbindung zwischen Adsorber und Kondensator vorgesehen, die sich über einen oder mehrere elektrisch betätigbare Ventile von außen öffnen oder schließen läßt.

Entsprechend einer weiteren Ausführungsform ist im Kondensator ein Wärmetauscher vorgesehen, der vom Kondensat umspült ist. Dieser kann ggf. zusätzlich zu dem Verdampferwärmetauscher mit einer Wärmequelle beim Entladen des erfindungsgemäßen Sorptionsspeicher verbunden werden, um die Wärmeabgabe des Adsorbers bzw. des Sorptionsspeichers leicht steuerbar erhöhen zu können.

Gemäß einer anderen vorteilhaften Ausgestaltung sind ein oder mehrere vertikal angeordnete Steigrohre im Kondensatbereich vorgesehen, über die bevorratetes Adsorbat zum Verdampfer bzw. zum Adsorber gelangen kann. Bei dieser Anordnung entsteht ein Kapillarverdampfer, der das im Kondensator bzw. Kondensatbereich befindliche flüssige Adsorbat selbst ansaugt. Dies geschieht infolge der Druckdifferenz zwischen Adsorber und Vorratsbehälter bzw. Kondensator und durch die Kapillarkräfte des Steigrohrs. Zwischen einem oder mehreren der über die Steigrohre gebildeten Verbindungen vom Vorratsbehälter zum Verdampfer bzw. Adsorber ist vorzugsweise ein von außen elektrisch betätigbares Ventil vorgesehen, um eine unkontrollierte Ladung oder Entladung des Sorptionsspeichers zu verhindern.

Vorteilhafterweise werden mehrere Sorptionsspeicher mit einer vorgefertigten Verteilerleitung verbunden, die an die Geometrie des bzw. der vorgenannten Sorptionsspeicher angepaßt ist und über die sich mittels elektrisch ansteuerbarer Ventile eine Reihen- oder Parallelschaltung der Adsorberwärmetauscher und/oder der Verdampferwärmetauscher und/oder der im Kondensator befindlichen Wärmetauscher herstellen läßt.

Bei einer erfindungsgemäßen Anordnung zur Speicherung von Wärme stehen während der Ladung des Sorptionsspeichers ein oder mehrere der vorgenannten Sorptionsspeicher über eine oder mehrere der Verteilerleitungen derart in Verbindung, daß der Adsorber oder die Adsorber des oder der Sorptionsspeicher von einer Wärmequelle gespeist werden. Weitere der vorgenannten, vorgefertigten Verteilerleitungen verbinden während der Ladung die Wärmetauscher des Kondensators oder der Kondensatoren der Sorptionsspeicher mit einer Wärmesenke.

Während der Entladung der Anordnung stehen die Verdampfer der Sorptionsspeicher über eine oder mehrere der vorgenannten, vorgefertigten Verteilerleitungen mit einer Wärmequelle in Verbindung. Weitere der Verteilerleitungen verbinden während der Entladung die Wärmetauscher der Adsorber der Sorptionsspeicher mit einer Wärmesenke.

Auch ist vorgesehen, daß Solarkollektoren und/oder eine Zusatzheizung, wie z.B. eine Holzfeuerung und/oder eine Wärmepumpe als Wärmequelle dienen. Als Wärmesenke kommt insbesondere ein Erdreich- und/oder ein Außenluftwärmetauscher und/oder ein Brauchwasserspeicher und/oder eine Raumheizung in Betracht.

Durch die Ausführungsformen des Vakuumbehälters bietet sich eine Vakuumwärmedämmung nach dem bekannten Prinzip eines Dewardgefäßes durch Einführung einer ggf. verspiegelten Doppelwand an. Die äußere Behälterwand erfüllt in diesem Fall die Unterdruckfestigkeit gegenüber der Atmosphäre, wobei die innere Behälterwand die Festigkeit gegenüber dem Innenraum bestimmt, der sich ebenfalls auf niedrigem Druckniveau befindet. Um die Innenwand vom Gewicht des eingebrachten Sorptionsmaterials zu entlasten, kann der evakuierte Zwischenraum ggf. nach dem Prinzip der Vakuumsuperisolation mit schlecht wärmeleitenden und druckbeständigen Glasfasern oder Schüttkörpern gefüllt werden.

Bei einer vereinfachten Ausführung eines Behälters für einen Sorptionsspeicher wird von einer Zweikammerkonfiguration ausgegangen, wobei die Kammern durch ein Ventil verbunden sind, welches einen großen Querschnitt und eine geringe Länge besitzt. Ein zur Wartung vorgesehener Stutzen kann so ausgeführt werden, daß eine gleichzeitige Evakuierung des Behälterinnenraumes und des Zwischenraumes für die Vakuumisolierung möglich wird. Ebenso kann durch Anbringen eines Blindflansches oder eines ähnlichen Verschlusses gegen die Atmosphäre die Verbindung zwischen Innenraum und Zwischenraum abgedichtet werden, so daß ein höheres Vakuum und somit bessere Dämmeigenschaften beim Betrieb des Sorptionsspeichers gegeben sind.

Bei dem erfindungsgemäß vorgeschlagenen Verfahren zur Wärmespeicherung und/oder zur Wärmeerzeugung, wird in einem ersten Schritt einem Adsorber, der ein mit einem Adsorbat versehenes Sorptionsmaterial aufweist, von einer Wärmequelle Wärmeenergie zugeführt. Dies geschieht insbesondere über einen im Adsorber angeordneten Wärmetauscher. Als Wärmequelle kommen insbesondere Solarkollektoren und/oder eine Zusatzheizung, wie z.B. eine Holzfeuerung, und/oder eine Wärmepumpe in Frage.

In einem zweiten Schritt wird aufgrund der dem Adsorber zugeführten Wärmeenergie das Adsorbat vom Adsorptionsmittel desorbiert.

In einem dritten Schritt wird das gasförmige Adsorbat kondensiert, das Kondensat in einem Kondensator bzw. Vorratsbehälter aufgefangen und die dabei entstehende Wärmeenergie einer Wärmesenke zugeführt. Als Wärmesenke wird insbesondere ein Brauchwasserspeicher, eine Raumheizung und/oder ein Erdreich- und/oder ein Außenluftwärmetauscher eingesetzt.

In einem vierten Schritt wird das Kondensat verdampft und das gasförmige Adsorbat dem Adsorber zugeführt.

Im nachfolgenden, fünften Schritt wird das Adsorbat vom Adsorber adsorbiert und die hierbei freigesetzte Adsorptionsenergie über einen Wärmetauscher einer Wärmesenke, wie insbesondere einer Raumheizung und/oder einem Brauchwasserspeicher zugeführt.

Vorzugsweise wird das erfindungsgemäße Verfahren in einem oder mehreren hermetisch verschlossenen und evakuierten Sorptionsspeichern bzw. in einer modulartigen Anordnung zur Speicherung von Wärme der vorgenannten Art ausgeführt.

Die Erfindung wird nachfolgend anhand von Ausführungsbeispielen und Figuren näher erläutert: Hierbei zeigen:
Fig. 1 eine Anordnung zur Wärmespeicherung, die mehrere erfindungsgemäße Sorptionsspeicher in Form einer Sorptionsspeichereinrichtung aufweist;
Fig. 2 die Sorptionsspeichereinrichtung gemäß Fig. 1, welche mehrere Sorptionsspeicher aufweist, die parallel miteinander verbunden sind;
Fig. 3 einen Sorptionsspeicher mit einem Kapillarverdampfer im Längsschnitt ;
Fig. 4 einen Sorptionsspeicher im Längsschnitt , der zwei separate Wärmetauscher aufweist, und zwar jeweils einen für die Kondensation und einen für die Verdampfung des verwendeten Adsorbates;
Fig. 5 einen Sorptionsspeicher, ebenfalls im Längsschnitt, bei dem der Kondensator bzw. Kondensatbehälter den Adsorber umschließt (Tank-in-Tank-System), und
Fig. 6 eine weitere Ausführungsform eines Sorptionsspeichers.

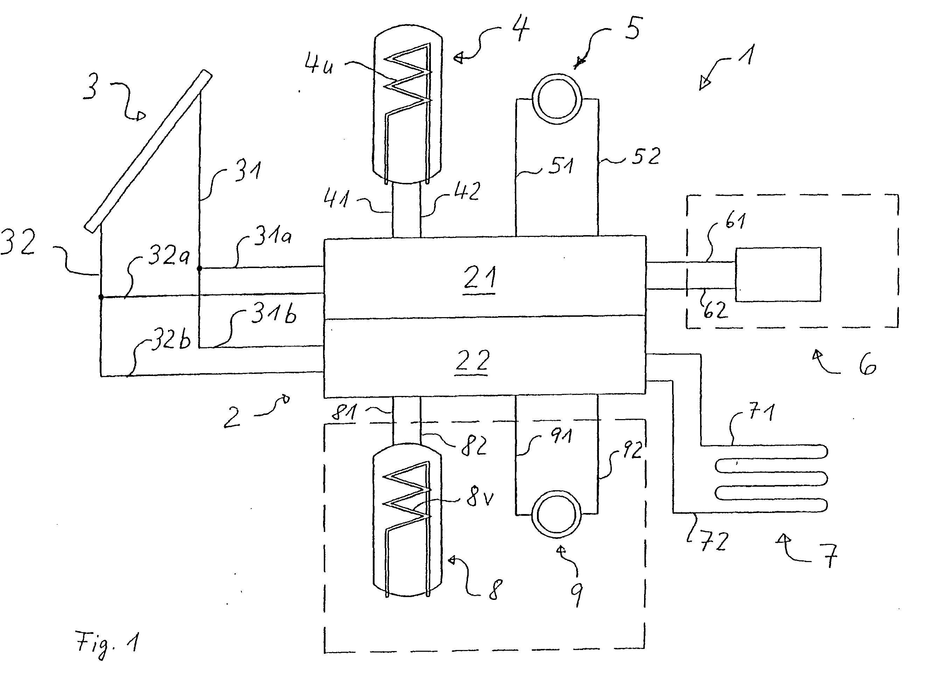

Fig. 1 zeigt eine erfindungsgemäße Anordnung zur Wärmespeicherung 1 mit einer Sorptionsspeichereinrichtung 2, Solarkollektoren 3, einem Brauchwasserspeicher 4 und einer Raumheizung 5. Die Sorptionsspeichereinrichtung 2 weist eine Adsorbereinrichtung 21 und eine Kondensatoreinrichtung 22 auf.

Bei ausreichend starker Sonneneinstrahlung wird die Sorptionsspeichereinrichtung 2 geladen. Beim Laden der Sorptionsspeichereinrichtung 2 wird der Adsorbereinrichtung 21 von den Solarkollektoren 3 erwärmtes Wasser über Rohrleitungen 31 und 31a mittels einer elektrischen Pumpe (nicht dargestellt) zugeführt. Das zugeführte, erwärmte Wasser erhitzt die Adsorbereinrichtung 21, kühlt dabei ab und fließt über Rohrleitungen 32a und 32 von der Adsorbereinrichtung 21 zurück in die Solarkollektoren 3.

Die Rohrleitungen 31 und 32 sind ferner über Leitungen 31b und 32b mit der Kondensatoreinrichtung 22 verbindbar. Hierzu ist an der Verbindungsstelle der Rohrleitung 31 mit den Rohrleitungen 31a und 31b sowie an der Verbindungsstelle der Rohrleitungen 32 mit den Rohrleitungen 32a und 32b jeweils ein Dreiwegeventil (nicht dargestellt) vorgesehen. Während des Ladevorgangs der Sorptionsspeichereinrichtung sind die Ventile derart betätigt, vorzugsweise elektrisch, daß das erwärmte Wasser nicht in die Kondensatoreinrichtung gelangt.

Es kann ferner vorgesehen werden, daß das beim Laden der Adsorbereinrichtung 21 von den Solarkollektoren 3 zugeführte Wasser ganz oder teilweise über Rohrleitungen 41 und 42 auch dem Wärmetauscher 4u des Brauchwasserspeichers 4 und/oder über Rohrleitungen 51 und 52 der Raumheizung 5 zugeführt wird, wenn dies zweckmäßig ist. Hieran ist ferner von Vorteil, daß sich hierdurch die Rücklauftemperatur des an die Solarkollektoren 3 zurückgeführten Wassers verringern und sich dadurch deren Wirkungsgrad erhöhen läßt. Hierzu sind an entsprechender Stelle im Rohrleitungssystem geeignete, elektrisch betätigbare Ventile vorgesehen (nicht dargestellt).

Ebenso kann auch eine Zusatzheizung 6, wie z.B. eine Holzfeuerung, vorgesehen werden, die über Rohrleitungen 61 und 62 mit der Adsorbereinrichtung 21 über Ventile verbindbar ist. Beim Laden der erfindungsgemäßen Sorptionsspeichereinrichtung kann die Zusatzheizung 6 zugeschaltet werden, wenn die von den Sonnenkollektoren 3 gelieferte Wärmeenergie für die erwünschte Ladung unzureichend ist.

Ferner kann die Zusatzheizung 6 ausschließlich zur Ladung der Sorptionsspeichereinrichtung herangezogen werden, wenn dies zweckmäßig ist. Ggf. kann die Verbindung der Solarkollektoren 3 mit der Adsorbereinrichtung 21 durch entsprechende Ventile (nicht dargestellt) getrennt werden.

Die beim Laden der erfindungsgemäßen Sorptionsspeichereinrichtung 2 entstehende Kondensationswärme wird einer Wärmesenke 7 über eine elektrische Pumpe (nicht dargestellt) und einem von dem Wasserkreislauf der Adsorbereinrichtung 21 getrennten Wasserkreislauf über Rohrleitungen 71 und 72 zugeführt. Bei der Wärmesenke 7 handelt es sich vorzugsweise um einen Erdreich- und/oder Außenluftwärmetauscher.

Optional, kann der Wärmetauscher 8v eines Brauchwasserspeichers 8 und/oder eine Raumheizung 9 mit der entstehenden Kondensationswärme über Rohrleitungen 81 und 82 sowie 91 und 92, durch die Schaltung entsprechender elektrisch betätigbarer Ventile (nicht dargestellt), beheizt werden. Es versteht sich, daß anstelle eines separaten Brauchwasserspeichers 8 bzw. einer separaten Raumheizung 9, der Brauchwasserspeicher 4 und die Raumheizung 5 verwendet werden kann, wenn das Rohrleitungssystem entsprechend ausgelegt ist.

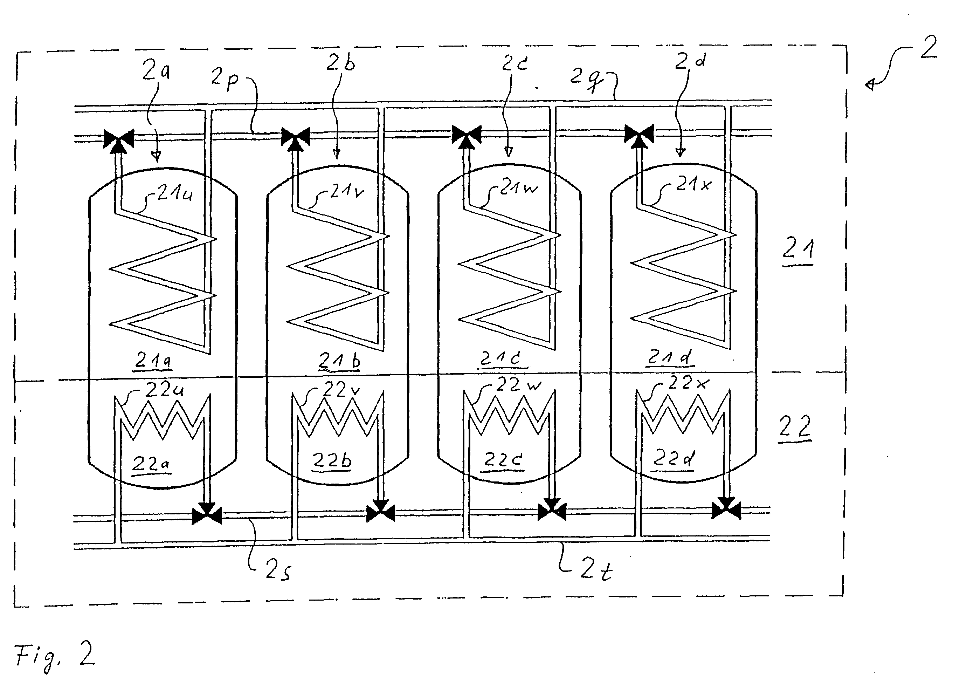

Fig. 2 zeigt eine erfindungsgemäße Sorptionsspeichereinrichtung 2 mit einer Adsorbereinrichtung 21 und einer Kondensatoreinrichtung 22. Die Sorptionsspeichereinrichtung 2 weist beispielhaft vier erfindungsgemäße Sorptionsspeicher 2a, 2b, 2c und 2d auf. Es versteht sich, daß auch mehr oder weniger Sorptions-speicher modulartig miteinander zu einer Sorptionsspeichereinrichtung zusammengefaßt werden können, wenn dies aufgrund der konkret gewünschten Speichermenge sinnvoll ist.

In dem in Fig. 2 gezeigten Beispiel weist jeder der Sorptionsspeicher jeweils einen Adsorber 21a, 21b, 21c und 21d auf, der mit einem oder mehreren der vorstehend genannten Sorptionsmaterialien und einem oder mehreren der genannten Adsorbate in der bereits angegebenen Weise gefüllt ist. Erfindungsgemäß ist in jedem der hermetisch verschlossenen, evakuierten Sorptionsspeicher 2a, 2b, 2c und 2d mit röhrenförmiger Form jeweils ein Wärmetauscher 21u, 21v, 21w und 21x im Adsorber angeordnet.

Ferner weist jeder Sorptionsspeicher 2a, 2b, 2c und 2d jeweils einen Kondensator 22a, 22b, 22c und 22d auf. In jedem der Kondensatoren der Sorptionsspeicher ist jeweils ein Wärmetauscher 22u, 22v, 22w und 22x angeordnet.

Vorgefertigte Rohrleitungen 2p verbinden die Vorläufe der Adsorberwärmetauscher 21u, 21v, 21w und 21x, während Rohrleitungen 2q die Rückläufe der Adsorberwärmetauscher verbinden, so daß die Adsorberwärmetauscher parallel geschaltet sind. In den Vorlauf eines jeden Adsorberwärmetauschers ist ein Dreiwegeventil geschaltet, mit dem jeder der Adsorberwärmetauscher von der Parallelschaltung getrennt werden kann.

Die Vorläufe der Kondensatorwärmetauscher eines jeden Sorptionsspeichers sind ebenfalls mit an die Geometrie der erfindungsgemäßen Sorptionsspeicher bzw. der Sorptionsspeichereinrichtung angepaßten Rohrleitungen 2s über Dreiwegeventile elektrisch schaltbar verbunden, so daß auch die Kondensatorwärmetauscher parallel geschaltet sind.

Obwohl in Figur 2 eine parallele Verschaltung dargestellt ist, die eine Erhöhung der von der Sorptionsspeichereinrichtung abgegebenen Leistung erlaubt, versteht es sich, daß die Sorptionsspeichereinrichtung auch so gestaltet sein kann, daß auch oder ausschließlich eine Reihenschaltung der Sorptionsspeicher erfolgt. Eine vollständige oder teilweise serielle Verschaltung erlaubt die Erzeugung höherer Temperaturdifferenzen zwischen Vorlauf und Rücklauf, wodurch beispielsweise eine Absenkung der Rücklauftemperatur bei der Speicherladung und somit eine bessere Ausnutzung der von den Solarkollektoren 3 gelieferten Wärmeenergie erreicht werden kann.

Durch das Verschalten mehrerer Sorptionsspeicher ist eine Anpassung der Anordnung an die verfügbaren bzw. benötigten Temperaturniveaus der Wärmequellen und -senken möglich. Um dies zu erreichen, muß der Ladezustand bekannt sein. Der Ladezustand kann durch eine mikroprozessorgesteuerte Regelung bestimmt werden, indem die Regelung jeweils den letzten Temperaturhub jedes Sorptionsspeichers ermittelt und speichert, und aus den Temperaturhüben den aktuellen Ladezustand berechnet.

Bei der Speicherladung wird zur optimalen Nutzung des Temperaturniveaus der Wärmequelle zunächst ausschließlich derjenige Sorptionsspeicher der erfindungsgemäßen Anordnung von Sorptionsspeichern geladen, der den niedrigsten Ladezustand der Anordnung aufweist. Bei diesem Sorptionsspeicher ist eine weitere Desorption bei den gegebenen Temperaturverhältnissen im Adsorber- und Verdampferkreis am ehesten zu erwarten.

Nach Abschluß oder mit fortschreitender Desorption kann die im Adsorber des aktuell geladenen Sorptionsspeichers gespeicherte sensible Wärme erfindungsgemäß entweder zur Desorption in weiteren Sorptionsspeichern, zur Brauchwassererwärmung oder ggf. zur Raumheizung genutzt werden.

Umgekehrt wird bei der Speicherentladung zunächst ausschließlich derjenige Sorptionsspeicher der erfindungsgemäßen Anordnung von Sorptionsspeichern entladen, der den höchsten Ladezustand aufweist. Hier ist davon auszugehen, daß dieser Sorptionsspeicher einen genügend großen Temperaturhub aufweist, um das Temperaturniveau im Adsorber an den Bedarf der Wärmesenken, wie insbesondere eine Raumheizung und/oder ein Brauchwasserspeicher, bei der aktuellen Verdampfertemperatur anpassen zu können.

Und bei geringer Sonneneinstrahlung kann die von den Sonnenkollektoren 3 gelieferte Wärmeenergie gezielt genutzt werden, indem der Sorptionsspeicher der Speicheranordnung mit dem höchsten Ladezustand zur Ladung eines anderen Sorptionsspeichers der Anordnung hinzugeschaltet, d.h. entladen wird. Ggf. steht dann eine Wärmeleistung zur Verfügung, die zur Ladung des anderen Sorptionsspeichers ausreicht. Wenn der Ladezustand des Sorptionsspeichers mit dem vormals höchsten Ladezustand zusammen mit der von den Sonnenkollektoren gelieferten Wärmemenge nicht für die Ladung des anderen Sorptionsspeichers ausreicht, kann auf den Sorptionsspeicher mit dem nächstniedrigeren Ladezustand, im Vergleich zu dem Ladezustand des Sorptionsspeichers mit dem vormals höchsten Ladezustand, umgeschaltet werden.

Eine Steigerung der Ladeeffektivität kann bspw. durch die Verwendung einer leistungsgeregelten Pumpe zur Anpassung des Temperaturniveaus im Kondensatorkreis erreicht werden. Ebenso kann die Kondensatortemperatur durch eine Brauchwasservorwärmung und/oder durch einen Erdwärmetauscher gesenkt werden. Ferner kann die Rücklauftemperatur aus dem ersten Sorptionsspeicher zur Desorption in weiteren nachgeschalteten Sorptionsspeichern oder zur Brauchwassererwärmung genutzt werden.

Bei der Speicherentladung wird vorzugsweise der erreichbare Temperaturhub an den Bedarf angepaßt, d.h. gering entladene Sorptionsspeicher der Anordnung von Sorptionsspeichern werden bevorzugt zur Brauchwassererwärmung genutzt und erst bei stärkerer Entladung wird die abgegebene Wärmeenergie einer Raumheizung zugeführt.

Aufgrund wechselnder Temperaturen im Verdampfer werden unterschiedliche Temperaturhübe benötigt. Um dem Rechnung zu tragen, wird im Laufe der Entladung zwischen den einzelnen Sorptionsspeichern umgeschalten. Bevorzugt werden die am stärksten entladenen Sorptionsspeicher verwendet. Erst wenn der Temperaturhub nicht mehr ausreicht, wird auf den nächstgeringer entladenen Sorptionsspeicher umgeschaltet.

Eine Steigerung der Entladeeffektivität kann durch die zusätzliche Verwendung eines Erdwärmetauschers erreicht werden, wenn die Solarkollektoren, bspw. in der Nacht, keine oder nur eine geringe Wärmeenergie abgeben. An einstrahlungsreichen Tagen während der Heizperiode, kann bspw. eine teilweise Ladung einzelner Sorptionsspeicher erfolgen.

Bei der Verwendung einer Zusatzheizung, wie z.B. einem Heizkessel, führt das höhere Temperaturniveau der Verbrennung zu einer hohen Vorlauftemperatur der Zusatzheizung, die zur Desorption in den Sorptionsspeichern genutzt werden kann. Die freiwerdende Kondensationswärme kann dann für eine Raumheizung genutzt werden. Die angegebenen Maßnahmen erlauben eine effektivere Nutzung der in der Zusatzheizung eingesetzten Energie.

Bei einem Ausführungsbeispiel besteht die Möglichkeit der Speicherung oder Erzeugung von Kälter durch den Sorptionsspeicher oder einzelne Speichermodule. So ist es bekannt, daß in gutgedämmten Niedrigenergiehäusern im Sommer Überhitzungsprobleme der Innenräume auftreten. Hier können Wand- oder Fußbodenheizung, oder wenn vorhanden auch Kühldecken, an den Verdampfer angeschlossen werden und eine Entladung der Speichermodule erfolgen, so daß eine Kühlung möglich wird. Da der Kühlbedarf hauptsächlich in Zeiten hoher thermischer Einstrahlung auftritt, besteht bei optimaler Auslegung die Möglichkeit, die aufgetretenen Teilentladungen wieder zu kompensieren. Im ürigen wird für die Kühlanwendung kein hoher Temperaturhub benötigt, so daß nur gering entladene Module für die Kühlung aktiviert werden, die schon bei geringen Desorptionstemperaturen wieder stärker geladen werden können. Bei einer entsprechenden Verschaltung der Module kann die Entladung parallel zur Ladung anderer Speichermodule durch die Solaranlage erfolgen, so daß der solare Eintrag in entsprechenden Umfang genützt wird.

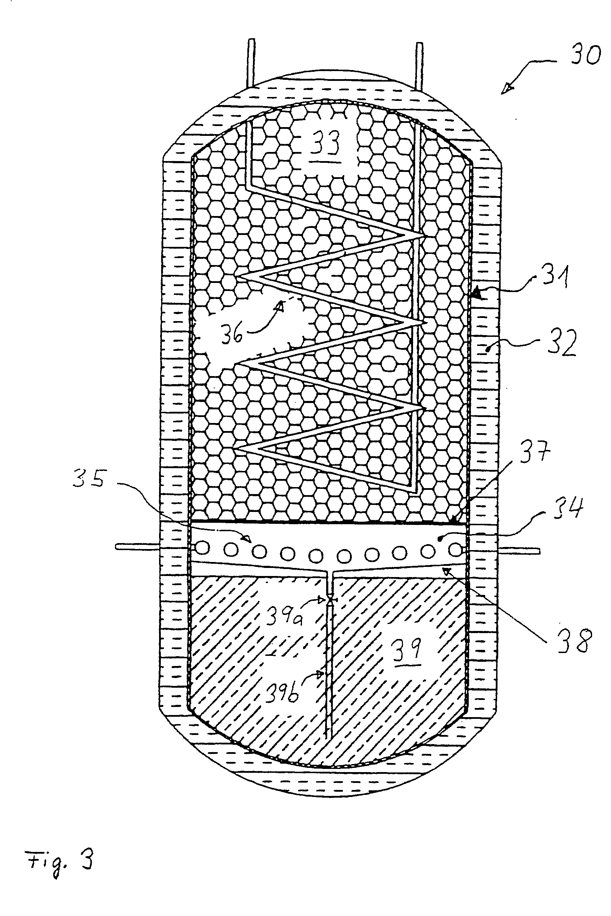

Fig. 3 zeigt die Ausgestaltung eines erfindungsgemäßen Sorptionsspeichers, der einen Kapillarverdampfer aufweist, im Längsschnitt. Der Sorptionsspeicher 30 besteht aus einem hermetisch abgeschlossenen Vakuumbehälter 31, vorzugsweise aus Stahl, der eine röhrenförmige Form aufweist. Zur besseren thermischen Isolierung gegenüber der Umgebung, ist der Vakuumbehälter 31 von einer Wärmedämmung 32 umgeben.

Im oberen Bereich des Vakuumbehälters 31 befindet sich ein Absorber 33 mit einem darin angeordneten Wärmetauscher 36. Der Wärmetauscher 36 ist in eine offenporige, thermisch gut leitende Matrix eingebettet, um einen guten Wärmeübergang zwischen dem Adsorberwärmetauscher 36 und dem Sorptionsmaterial zu erreichen. Die erfindungsgemäßen Vorschläge zur Herbeiführung eines guten Wärmeübergangs sind bereits angegeben worden, so daß an dieser Stelle lediglich hierauf verwiesen wird. Dasselbe gilt für die Art und Weise in der das Sorptionsmaterial in den Adsorber eingebracht wird.

In dem darunter liegenden Bereich des Vakuumbehälters 31 schließt sich ein Kondensator bzw. Verdampfer 34 an. Der Adsorber 33 und der Kondensator bzw. Verdampfer 34 sind durch ein in beide Richtungen wasserdampfdurchlässiges Netz 37 voneinander getrennt. Im Kondensator bzw. Verdampfer 34, der einen Hohlraum darstellt, ist ein Wärmetauscher 35 ungeordnet, der beim Laden des Sorptionsspeichers die Kondensation des von dem Sorptionsmaterial desorbierten Adsorbates herbeiführt. Anstelle eines ebenen Wärmetauschers, kann ein Wärmetauscher 35 benutzt werden, der sich zumindest im Bereich eines Durchlasses zum Bereich zur Sammlung kondensierten Adsorbates, zu diesem Bereich hin erstreckt. Beim Entladen des Sorptionsspeichers bildet der Wärmetauscher 35 einen Verdampfer, wenn er beispielsweise von warmem oder heißem Wasser durchströmt wird. Auf die Doppelfunktion ist bereits detailliert eingegangen worden, so daß an dieser Stelle hierauf verwiesen wird.

An den Kondensator bzw. Verdampfer schließt sich im unteren Bereich des Vakuumbehälters 31 eine trichterförmige Trennwand 38 an. Die Trennwand 38 befindet sich zwischen dem Kondensator bzw. Verdampfer 34 und dem darunter liegenden untersten Bereich des Vakuumbehälters 31, der das flüssige Kondensat bevorratet. Die trichterförmige Trennwand 38 sammelt das von dem Kondensator 34 tropfende Kondensat und führt es dem Auslaß der trichterförmigen Trennwand zu. Am Auslaß ist ein von außen elektrisch steuerbares Ventil 39a angeordnet, mit dem insbesondere verhindert werden kann, daß bevorratetes Kondensat ungewollt in den Bereich des Adsorbers gelangt. An das Ventil schließt sich ein Steigrohr 39b an, dessen anderes Ende tief in das bevorratete Adsorbat hineinreicht, und das insbesondere vom Kondensator 34 tropfende Kondensat in den Vorratsbereich des erfindungsgemäßen Sorptionsspeichers 30 leitet. Es versteht sich, daß auch mehrere Steigrohre und zugehörige Auslässe an der Trennwand 38 vorgesehen sein können.

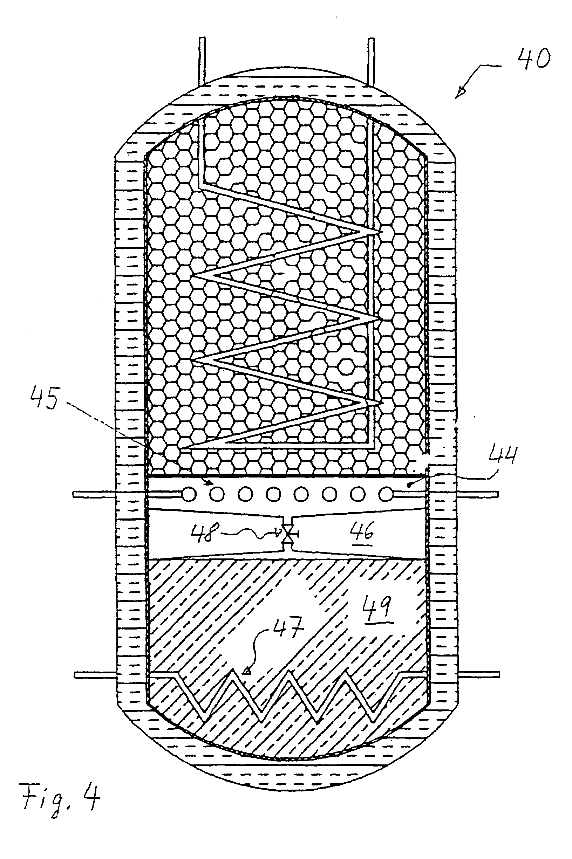

Fig. 4 zeigt einen erfindungsgemäßen Sorptionsspeicher 40 im Längsschnitt, der zwei separate Wärmetauscher 45 und 47 aufweist, und zwar jeweils einen für die Kondensation und einen für die Verdampfung des verwendeten Adsorbates. Soweit nichts anderes angegeben wird, weist der erfindungsgemäße Sorptions-speicher 40 ansonsten dieselben Merkmale wie der in Fig. 3 angegebene Sorptionsspeicher 30 auf.

Anstelle des im Zusammenhang mit Fig. 3 beschriebenen Kapillarverdampfers, besitzt der Verdampfer 44 des Sorptionsspeichers 40 einen ebenen Wärmetauscher 45, der ebenfalls waagerecht angeordnet ist. Dem schließt sich in diesem Ausführungsbeispiel anstelle einer einfachen Trennwand 38, eine, ebenfalls horizontal ausgerichtete doppelte Trennwand 46 an. Die doppelte Trennwand hat die Form zweier Trichter, deren Auslässe miteinander verbunden sind. Lediglich über den gemeinsamen Auslaß besteht eine durch ein elektrisch betätigbares Ventil 48 zu öffnende oder schließende Verbindung zwischen dem Verdampfer 44 und dem darunter befindlichen Bereich 49, in dem das kondensierte Adsorbat gesammelt wird. Im unteren Teil des Bereichs 49, ist der Wärmetauscher 47 horizontal angeordnet, so daß stets eine Überflutung mit flüssigem Adsorbat gewährteistet ist.

Durch eine entsprechende Schaltung mit einem Dreiwegeventil können beim Entladen des erfindungsgemäßen Sorptionsspeichers 40 sowohl der dann als Verdampfer dienende Wärmetauscher 45 als auch der im flüssigen Adsorbat befindliche Wärmetauscher 47 mit einer Wärmequelle verbunden werden. Dies kann zweckmäßig sein, um die von einem geladenen Sorptionsspeicher entnehmbare Wärmeleistung über einen weiten Bereich einstellen zu können.

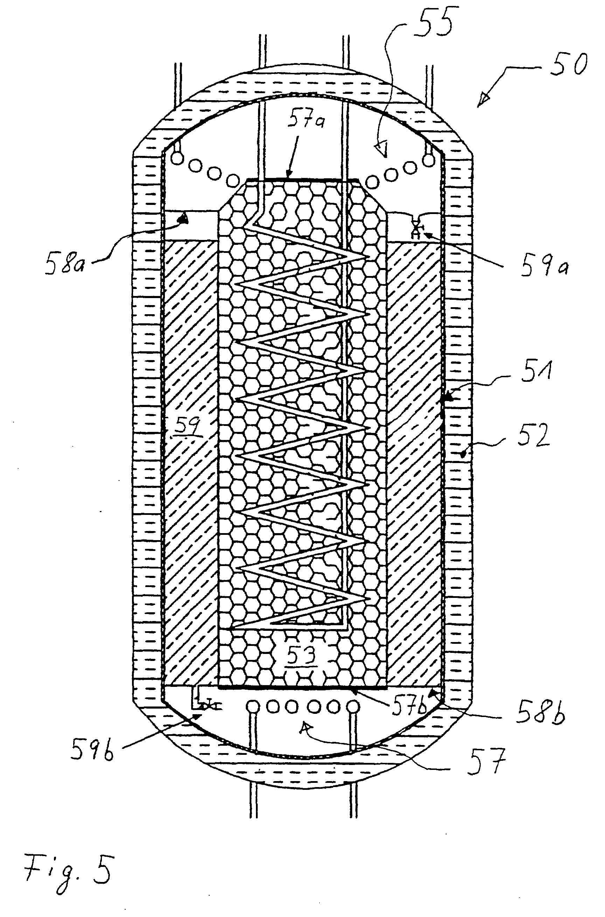

Fig. 5 zeigt ebenfalls einen erfindungsgemäßen Sorptionsspeicher 50 im Längsschnitt, bei dem der Bereich 59, der zur Bevorratung des Kondensates dient, den Adsorber 53 umschließt. Diese Anordnung wird als sogenanntes Tank-in-Tank-System bezeichnet. Der Adsorber 53 ist wie der Sorptionsspeicher röhrenförmig und mit seiner Längsachse entlang der Längsachse des Sorptionsspeichers 50 in der Mitte angeordnet.

Der Sorptionsspeicher 50 weist ebenfalls hermetisch verschlossenen Behälter 51 auf, ist mit einer äußeren Wärmedämmung 52 versehen, und ist, wie die in den anderen Figuren dargestellten Sorptionsspeicher auch, evakuiert. Als Sorptionsmaterial wird vorzugsweise ebenfalls Silicagel und Wasser als Adsorbat verwendet.

In den Adsorber 53 ist ein Wärmetauscher, wie bei den vorstehend erläuterten Sorptionsspeichern auch, integriert. Lediglich an seinem oberen und unteren Ende, weist der Adsorber 53 über wasserdampfdurchlässige Netze 57a und 57b eine Verbindung zum Inneren des Sorptionsspeichers 50 auf. Etwa in Höhe des Netzes 57a, ist ein Kondensationswärmetauscher 55 vorgesehen, der sich um den Adsorber 53 herum erstreckt, so daß oberhalb des Netzes 57a keine Wärmeschlange des Kondensationswärmetauschers 55 verläuft. Etwa in Höhe des oberen Netzes 57a verläuft eine waagerechte Trennwand 58a, die mit dem Adsorber 53 und der Wand des Sorptionsspeichers 50 abschließt. Ebenso ist etwa in Höhe des unteren Netzes 57b eine entsprechende Trennwand 58b vorgesehen, so daß ein Tank 59 zur Aufnahme kondensierten Adsorbates entsteht. Der Tank 59 hat oben und unten je ein von außen elektrisch steuerbares Ventil 59a bzw. 59b, über das sich eine Verbindung mit dem oberen Kondensationsbereich bzw. eine Verbindung mit dem unteren Verdampfungsbereich steuerbar herstellen läßt.

Die Funktionsabläufe in den erfindungsgemäßen Sorptionsspeichern sind vorstehend bereits detailliert erläutert worden, und daher wird auf sie verwiesen. Es erfolgt lediglich eine kurze Erläuterung der Funktionsweise des Sorptionsspeichers 50.

Beim Laden des erfindungsgemäßen Sorptionsspeichers 50, wird über den in den Adsorber 53 integrierten Wärmetauscher Wärmeenergie aus einer Wärmequelle zugeführt. Das am Adsorber adsorbierte Adsorbat, vorzugsweise Wasser, desorbiert, der Wasserdampf passiert das wasserdampfdurchlässige Netz 57a und gelangt an den Kondensationswärmetauscher 55. Der Kondensationswärmetauscher ist mit einer Wärmesenke verbunden und entzieht dem vorbeiströmenden Wasserdampf Wärmeenergie, der Wasserdampf kondensiert und tropft auf die obere Trennwand 58 a. Über ein während des Ladevorgangs geöffnetes Ventil 59a, das sich in einer Senke der oberen Trennwand 58a befindet, fließt das Kondensat in den Tank 59, der den Adsorber 53 konzentrisch umschließt. Nach Abschluß des Ladevorgangs wird das Ventil 59a geschlossen, um zu verhindern, daß bereits desorbiertes Adsorbat unkontrolliert aus dem Tank zurück in den Adsorber gelangt.

Zur Entladung wird das Ventil 59b geöffnet, das Kondensat fließt über das Ventil 59b in geregeltem Maße in den Verdampfer, wird von dem Verdampferwärmetauscher 57, der mit einer Wärmequelle verbunden ist, verdampft und der Wasserdampf strömt über das wasserdampfdurchlässige Netz 57b zurück in den Adsorber 53, wo er adsorbiert. Bei der Adsorption wird Adsorptionsenergie frei, die einer am Adsorberwärmetauscher angeschlossenen Wärmesenke, wie z.B. einem Brauchwasserspeicher oder einer Raumheizung, zugeführt wird.

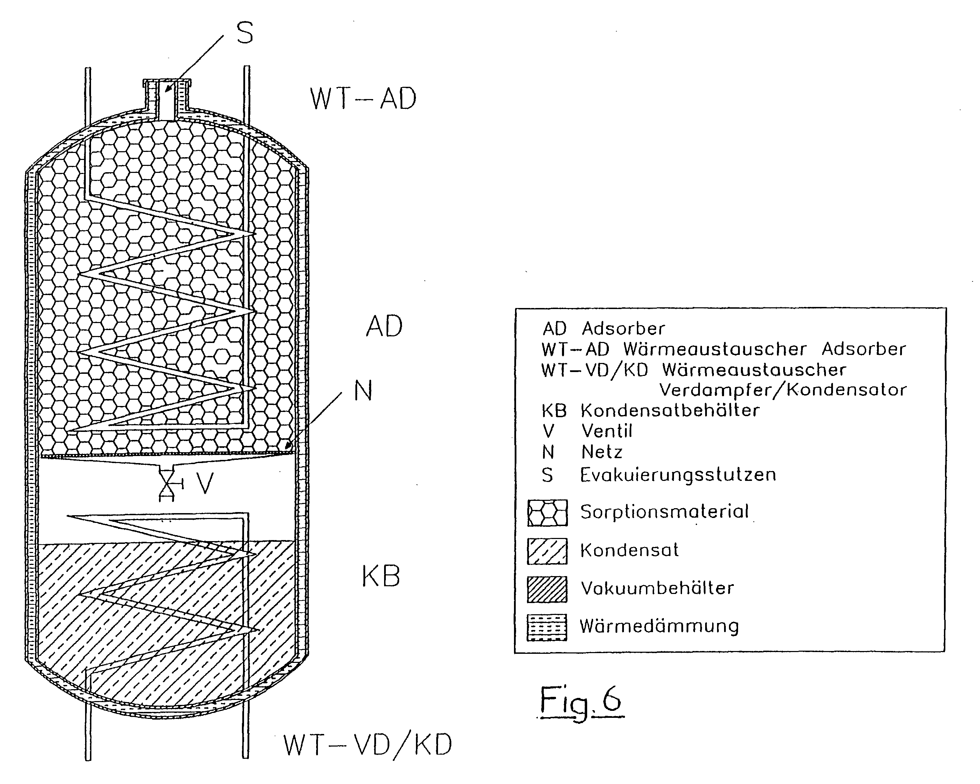

Figur 6 zeigt eine weitere Ausführungsform eines Sorptionsspeichers in einer Schnittdarstellung. Bei dem gezeigten Behälter ist der Innenaufbau im Vergleich zu den bisher gezeigten Beispielen vereinfacht. In einem oberen Teil des Behälters ist ein Wärmetauscheradsorber WT-AD vorgesehen, wobei der untere Teil des Behälters mit einem Wärmetauscher/Verdampfer/Kondensator/WT -VD/KD ausgerüstet ist und sich zwischen beiden Kammern ein Ventil V befindet. Ein Netz N hält das Sorptionsmaterial vom Ventileinlaufbereich zurück. Über einen Evakuierungsstutzen S kann eine gleichzeitige Evakuierung des Behälterinnenraumes und des Zwischenraumes für die Vakuumisolierung erfolgen. Im Behälterabschnitt AD wird also das Sorptionsmaterial aufgenommen, wobei im unteren Behälterabschnitt KD das Kondensat aufgefangen wird.

## Patentansprüche

1. Sorptionsspeicher (2a, 2b, 2c, 2d; 30; 40; 50) zur Speicherung von Wärme, umfassend folgende Merkmale:
- einen oder mehrere hermetisch verschlossene Behälter (31; 51);
- im Behälter oder in der Anordnung (2) von Behältern sind ein oder mehrere Adsorbate eingeschlossen;
- der Behälter oder die Anordnung von Behältern weist mindestens einen ersten und einen zweiten Bereich auf (21, 22; 33, 39; 53, 59);
- der erste Bereich (21; 33; 53; AD) ist mit einem Sorptionsmaterial zur Adsorption des oder der Adsorbate versehen und bildet einen Adsorber;
- der zweite Bereich (22; 39; 59; KB) dient zur Aufnahme des oder der kondensierten Adsorbate, die vom Sorptionsmaterial desorbiert worden sind,
**dadurch gekennzeichnet, daß**
zwischen dem ersten und dem zweiten, kammerartigen Bereich, diese trennend, ein Netz sowie ein Ventileinlaufbereich mit einem steuerbaren Ventil (39a; 48; 59a; V) angeordnet sind, wobei der erste Bereich einen oder mehrere Wärmetauscher (36; WT) aufweist und das Ventil im Behälterinneren befindlich ist, weiterhin der Behälter oder die Anordnung von Behältern zumindest soweit evakuiert ist, daß die Restgasdrücke den Transport des verdampften Kondensates zum Adsorber weitgehend nicht behindern.

2. Sorptionsspeicher nach Anspruch 1,
**dadurch gekennzeichnet, daß**
der Behälter oder die Anordnung von Behältern einen dritten Bereich (34; 44; 55) aufweisen, der einen Kondensator bildet, der das oder die gasförmigen Adsorbate kondensiert, und/oder einen Verdampfer bildet (34; 44; 57), in dem das kondensierte Adsorbat, das Kondensat, verdampft.

3. Sorptionsspeicher nach einem oder mehreren der vorstehenden Ansprüche,
**dadurch gekennzeichnet, daß**
der oder die Behälter eine röhrenförmige Gestalt aufweisen.

4. Sorptionsspeicher nach einem oder mehreren der vorstehenden Ansprüche,
**dadurch gekennzeichnet, daß**
der oder die Behälter mit einem Stahlmantel versehen sind.

5. Sorptionsspeicher nach einem oder mehreren der vorstehenden Ansprüche,
**dadurch gekennzeichnet, daß**
der oder die Behälter eine Wärmedämmung (32; 52) zur thermischen Isolation gegenüber der Umgebung aufweisen.

6. Sorptionsspeicher nach einem oder mehreren der vorstehenden Ansprüche,
**dadurch gekennzeichnet, daß**
die einen oder mehreren Adsorbate zumindest teilweise Wasser aufweisen.

7. Sorptionsspeicher nach Anspruch 6,
**dadurch gekennzeichnet, daß**
als einziges Adsorbat Wasser verwendet wird.

8. Sorptionsspeicher nach einem der Ansprüche 1-6,
**dadurch gekennzeichnet, daß**
die ein oder mehreren Adsorbate zumindest teilweise Ammoniak aufweisen.

9. Sorptionsspeicher nach einem der Ansprüche 1 bis 5,
**dadurch gekennzeichnet, daß**
als einziges Adsorbat Ammoniak verwendet wird.

10. Sorptionsspeicher nach einem oder mehreren der vorstehenden Ansprüche,
**dadurch gekennzeichnet, daß**
das Sorptionsmaterial Adsorbenzien, wie insbesondere Aktivkohle, Kieselgel oder Aluminiumoxidpulver aufweist.

11. Sorptionsspeicher nach einem oder mehreren der vorstehenden Ansprüche,
**dadurch gekennzeichnet, daß**
das Sorptionsmaterial Silicagel ist.

12. Sorptionsspeicher nach einem oder mehreren der Ansprüche 2 bis 11,
**dadurch gekennzeichnet, daß**
zwischen Kondensator (39; 49; 59) und Adsorber (33; 53) ein oder mehrere Wärmetauscher (35; 45) zur Kondensation und/oder Verdampfung vorgesehen sind.

13. Sorptionsspeicher nach einem oder mehreren der Ansprüche 2 bis 12,
**dadurch gekennzeichnet, daß**
im Kondensator (49) ein Wärmetauscher (47) angeordnet und von dem Kondensat umgeben ist.

14. Sorptionsspeicher nach einem der Ansprüche 2 bis 13,
**dadurch gekennzeichnet, daß**
die Verbindung zwischen Adsorber und Kondensator zumindest teilweise durch ein oder mehrere vertikal angeordnete Steigrohre (39b) gebildet ist.

15. Sorptionsspeicher nach einem der Ansprüche 1 bis 14,
**dadurch gekennzeichnet, daß** eine vorgefertigte Verteilerleitung (2p, 2q, 2s, 2t) an die Geometrie des Sorptionsspeichers nach einem der vorstehenden Ansprüche angepaßt ist, und daß die Verteilerleitung eine Reihen- oder Parallelschaltung der Adsorberwärmetauscher (21u, 21v, 21w, 21x) mehrerer Sorptionsspeicher (2a, 2b, 2c, 2d) herbeiführt.

16. Anordnung zur Speicherung von Wärme mit einem Sorptionsspeicher nach einem der Ansprüche 1 bis 14,
**dadurch gekennzeichnet, daß**
- der Adsorber oder die Adsorber (21a, 21b, 21c, 21d) des oder der Sorptionsspeicher mit einer oder mehreren Wärmequellen (3, 6) über einen oder mehrere Wärmetauscher (21u, 21v, 21w, 21x) bei der Ladung des Sorptionsspeichers in Verbindung stehen, und
- der oder die Wärmetauscher (22u, 22v, 22w, 22x) des Kondensators oder der Kondensatoren (22a, 22b, 22c, 22d) mit einer oder mehreren Wärmesenken (7, 8, 9) in Verbindung stehen.

17. Anordnung nach Anspruch 16,
**dadurch gekennzeichnet, daß**
die Wärmequellen durch Solarkollektoren (3) und/oder einen Brauchwasserspeicher (4, 8) und/oder eine Zusatzheizung (6), wie eine Holzfeuerung und/oder eine Wärmepumpe, gebildet sind, und die Wärmesenken durch einen Erdreich- und/oder einen Außenluftwärmetauscher (7) und/oder einen Brauchwasserspeicher (8) und/oder eine Raumheizung (9) gebildet sind.

18. Verfahren zur Wärmespeicherung und/oder zur Wärmeerzeugung mit einem Sorptionsspeicher nach einem der Ansprüche 1 bis 14,
**dadurch gekennzeichnet, daß**
- in einem ersten Schritt der Adsorber (21a, 21b, 21c, 21d), der ein mit einem Adsorbat versehenes Adsorptionsmittel aufweist, wie insbesondere über einen im Adsorber angeordneten Wärmetauscher (21u, 21v, 21w, 21x), von einer Wärmequelle (3, 6) Wärmeenergie zugeführt wird, wie insbesondere über Solarkollektoren (3) und/oder eine Zusatzheizung (6), wie z.B. ein Holzheizkessel, und/oder eine Wärmepumpe;
- in einem zweiten Schritt aufgrund der dem Adsorber zugeführten Wärmeenergie das Adsorbat vom Adsorptionsmittel desorbiert wird und
- in einem dritten Schritt das gasförmige Adsorbat kondensiert, das Kondensat aufgefangen wird und die dabei entstehende Wärmeenergie einer Wärmesenke (7, 8, 9) zugeführt wird, wie z.B. einem Brauchwasserspeicher (8), einer Raumheizung (9) und/oder einem Erdreich- und/oder Außenluftwärmetauscher (7).

19. Verfahren nach Anspruch 18,
**dadurch gekennzeichnet, daß**
- in einem vierten Schritt das Kondensat verdampft und das gasförmige Adsorbat dem Adsorber zugeführt wird;
- in einem fünften Schritt das Adsorbat vom Adsorber adsorbiert und hierbei Wärmeenergie freigesetzt wird; und
- die freigesetzte Wärmeenergie über einen Wärmetauscher der Wärmesenke, wie insbesondere der Raumheizung und/oder einem Brauchwasserspeicher zugeführt wird.

## Claims

1. Sorption accumulator (2a, 2b, 2c, 2d; 30, 40, 50) for the accumulation of heat, comprising the following features:
- one or several hermetically sealed vessels (31; 51);
- in the vessel or in the arrangement of vessels (2) one or several adsorbates are contained;
- the vessel or the arrangement of vessels comprises at least a first and a second area (21, 22; 33, 39; 53, 59);
- the first area (21; 33; 53; AD) is provided with a sorption material for the adsorption of the adsorbate or adsorbates and forms an adsorber;
- the second area (22; 39; 59; KB) serves to receive the condensed adsorbate or adsorbates which have been desorbed from the sorption material,
**characterised in that**
a net as well as a valve inlet area with a controllable valve (39a; 48; 59a; V) are arranged between the first and the second chamber-like area and separating these, with the first area comprising one or several heat exchangers (36; WT) and the valve being located inside the vessel, furthermore, with the vessel or the arrangement of vessels being evacuated at least to such an extent that the residual gas pressures do almost not impede the transport of the evaporated condensate to the adsorber.

2. The sorption accumulator according to Claim 1,
**characterised in that**
the vessel or the arrangement of vessels comprises a third area (34; 44; 55) which forms a condenser which condenses the gaseous adsorbate or the adsorbates, and/or an evaporator (34; 44; 57) in which the condensed adsorbate, the condensate, evaporates.

3. The sorption accumulator according to one or several of the previous claims,
**characterised in that**
the vessel or the vessels comprise a tubular shape.

4. The sorption accumulator according to one or several of the previous claims,
**characterised in that**
the vessel or the vessels are provided with a steel shell.

5. The sorption accumulator according to one or several of the previous claims,
**characterised in that**
the vessel or the vessels comprise a thermal insulation (32; 52) for the thermal insulation against the environment.

6. The sorption accumulator according to one or several of the previous claims,
**characterised in that**
the one or several adsorbates comprise at least partially water.

7. The sorption accumulator according to Claim 6,
**characterised in that**
water is used as the sole adsorbate.

8. The sorption accumulator according to any of Claims 1 to 6,
**characterised in that**
the one or the several adsorbates comprise at least partially ammonia.

9. The sorption accumulator according to any of Claims 1 to 5,
**characterised in that**
ammonia is used as the sole adsorbate.

10. The sorption accumulator according to one or several of the previous claims,
**characterised in that**
the sorption material comprises adsorbents such as in particular activated charcoal, silica gel, or aluminium oxide powder.

11. The sorption accumulator according to one or several of the previous claims,
**characterised in that**
the sorption material is silica gel.

12. The sorption accumulator according to one or several of Claims 2 to 11,
**characterised in that**
one or several heat exchangers (35; 45) are provided between the condenser (39; 49; 59) and the adsorber (33; 53) for condensation and/or evaporation.

13. The sorption accumulator according to one or several of Claims 2 to 12,
**characterised in that**
a heat exchanger (47) is arranged in the condenser (49) and surrounded by the condensate.

14. The sorption accumulator according to one or several of Claims 2 to 13,
**characterised in that**
the connection between adsorber and condenser is at least partially formed by one or several vertically arranged risers (39b).

15. The sorption accumulator according to any of Claims 2 to 14,
**characterised in that**
a pre-fabricated distributor (2p, 2q, 2s, 2t) is adapted to the geometry of the sorption accumulator according to any of the previous claims, and that the distributor effects a series or parallel connection of the adsorber heat exchangers (21u, 21v, 21w, 21x) of several sorption accumulators (2a, 2b, 2c, 2d).

16. An arrangement for the accumulation of heat with a sorption accumulator according to any of Claims 1 to 14,
**characterised in that**
- the adsorber or the adsorbers (21a, 21b, 21c, 21d) of the sorption accumulator or the sorption accumulators are communicating with one or several heat sources (3, 6) via one or several heat exchangers (21u, 21v, 21w, 21x) during charging the sorption accumulator, and
- the heat exchanger or the heat exchangers (22u, 22v, 22w, 22x) of the condenser or the condensers (22a, 22b, 22c, 22d) are communicating with one or several heat sinks (7, 8, 9).

17. The arrangement according to Claim 16,
**characterised in that**
the heat sources are formed by solar collectors (3) and/or a non-potable water reservoir (4, 8) and/or an auxiliary heating (6) such as a wood furnace and/or a heat pump, and the heat sinks are formed by a soil and/or atmospheric air heat exchanger (7) and/or a non-potable water reservoir (8) and/or a room heating (9).

18. A method for heat accumulation and/or heat generation with a sorption accumulator according to one of Claims 1 to 14,
**characterised in that**
- in a first step heat energy is supplied to the adsorber (21a, 21b, 21c, 21d) which comprises an adsorption agent provided with an adsorbate, e.g. particularly via a heat exchanger (21u, 21v, 21w, 21x) arranged in the adsorber, from a heat source (3, 6), particularly e.g. from solar collectors (3) and/or an auxiliary heating (6) such as e.g. a wood boiler and/or a heat pump;
- in a second step the adsorbate is desorbed from the adsorption agent because of the heat energy supplied to the adsorber; and
- in a third step the gaseous adsorbate condenses, the condensate is collected, and the heat energy generating thereby is supplied to a heat sink (7, 8, 9) such as a non-potable water reservoir (8), a room heating (9), and/or a soil and/or atmospheric air heat exchanger (7).

19. The method according to Claim 18,
**characterised in that**
- in a fourth step the condensate is evaporated and the gaseous adsorbate is supplied to the adsorber;
- in a fifth step the adsorbate is adsorbed by the adsorber and heat energy is released thereby; and
- the released heat energy is supplied to the heat sink such as in particular the room heating and/or a non-potable water reservoir via a heat exchanger.

## Revendications

1. Accumulateur à sorption (2a, 2b, 2c, 2d ; 30 ; 40 ; 50) destiné à stocker la chaleur, comprenant les caractéristiques suivantes :
- un ou plusieurs réservoirs (31 ; 51) fermés hermétiquement ;
- le réservoir ou l'agencement (2) de réservoirs contiennent un ou plusieurs adsorbats ;
- le réservoir ou l'agencement de réservoirs comportent au moins une première et une deuxième zone (21, 22 ; 33, 39 ; 53, 59) ;
- la première zone (21 : 33 ; 53 ; KD) contient une matière de sorption destinée à adsorber le ou les adsorbats et formé une unité d'adsorption ;
- la deuxième zone (22 ; 39 ; 59 ; KB) est destinée à recevoir le ou les adsorbats condensés, qui sont libérés par désorption à partir de la matière de sorption,
**caractérisé en ce qu'**
une grille, ainsi qu'une zone d'entrée de soupape, munie d'une soupape (39a ; 48 ; 59a ; V) pouvant être commandée, sont disposées entre la première et la deuxième zone en forme de chambres en vue de former une séparation entre celles-ci, la première zone étant munie d'un ou plusieurs Echangeurs thermiques (36 ; WT) et la soupape étant disposée à l'intérieur du réservoir, en outre, le réservoir ou l'agencement de réservoirs sont vidés au moins jusqu'à un niveau tel que les pressions des gaz résiduels ne constituent sensiblement pas d'obstacle au transport du condensat évaporé vers l'unité d'adsorption.

2. Accumulateur à sorption selon la revendication 1,
**caractérisé en ce que**
le réservoir ou l'agencement de réservoirs comportent une troisième zone (34 ; 44 ; 55), qui forme un condenseur, dans lequel sont condensés le ou les adsorbats gazeux, et/ou forme un évaporateur (34 ; 44 ; 57) dans lequel l'adsorbat condensé, à savoir le condensat, s'évapore.

3. Accumulateur à sorption selon une ou plusieurs des revendications précédentes,
**caractérisé en ce que**
le ou les réservoirs sont réalisés selon une forme tubulaire.

4. Accumulateur à sorption selon une ou plusieurs des revendications précédentes,
**caractérisé en ce que**
le ou les réservoirs sont entourés d'une chemise en acier.

5. Accumulateur à sorption selon une ou plusieurs des revendications précédentes,
**caractérisé en ce que**
le ou les réservoirs sont revêtus d'un isolant thermique (32 ; 52) pour former une isolation thermique par rapport à l'environnement.

6. Accumulateur à sorption selon une ou plusieurs des revendications précédentes,
**caractérisé en ce que**
les un ou plusieurs adsorbats contiennent au moins, en partie de l'eau.

7. Accumulateur à sorption selon la revendication 6,
**caractérisé en ce que**
seule l'eau est utilisée comme adsorbat.

8. Accumulateur à sorption selon l'une des revendications 1 à 6,
**caractérisé en ce que**
les un ou plusieurs adsorbats contiennent au moins en partie de l'ammoniac.

9. Accumulateur à sorption selon une des revendications 1 à 5,
**caractérisé en ce que**
seul l'ammoniac est utilisé comme adsorbat.

10. Accumulateur à sorption selon une ou plusieurs des revendications précédentes,
**caractérisé en ce que**
la matière de sorption contient des adsorbants, en particulier tels que le charbon actif, le gel de silice ou la poudre d'alumine.

11. Accumulateur à sorption selon une ou plusieurs des revendications précédentes,
**caractérisé en ce que**
la matière de sorption est du gel de silice.

12. Accumulateur à sorption selon une ou plusieurs des revendications 2 à 11,
**caractérisé en ce que**,
entre le condenseur (39 ; 49 ; 59) et l'unité d'adsorption (33 ; 53), sont prévus un ou plusieurs échangeurs thermiques (35 ; 45) destinés à produire la condensation et/ou l'évaporation.

13. Accumulateur à sorption selon une ou plusieurs des revendications 2 à 12,
**caractérisé en ce qu'**
un échangeur thermique (47) est placé dans le condenseur (49) et est enveloppé par le condensat.

14. Accumulateur à sorption selon l'une des revendications 2 à 13,
**caractérisé en ce que**
la liaison entre l'unité d'adsorption et le condenseur est formée au moins en partie par un ou plusieurs tuyaux de montée (39b) disposés verticalement.

15. Accumulateur à sorption selon l'une des revendications 1 à 14,
**caractérisé en ce qu'**
une conduite de distribution (2p, 2q, 2s, 2t) préfabriqués est adaptée à la géométrie de l'accumulateur à sorption selon l'une des revendications précédentes, et **en ce que** la conduite de distribution permet de monter en série ou en parallèle les échangeurs thermiques (21u, 21v, 21w, 21x) de plusieurs accumulateurs à sorption (2a, 2b, 2c, 2d).

16. Agencement pour le stockage de chaleur dans un accumulateur à sorption selon l'une des revendications 1 à 14,
**caractérisé en ce que**
- l'unité d'adsorption ou les unités d'adsorption (21a, 21b, 21c, 21d) du ou des accumulateurs à sorption sont reliées à une ou plusieurs sources de chaleur (3, 6) par l'intermédiaire d'un ou plusieurs échangeurs thermiques (21u, 21v, 21w, 21x) au moment du chargement de l'accumulateur à sorption, et
- le ou les échangeurs thermiques (22u, 22v, 22w, 22x) du ou des condenseurs (22a, 22b, 22c, 22d) sont reliés à un ou plusieurs dissipateurs thermiques (7, 8, 9).

17. Agencement selon la revendication 16,
**caractérisé en ce que**
les sources de chaleur sont formées par des capteurs solaires (3) et/ou un réservoir d'eau industrielle (4, 8) et/ou un appareil de chauffage supplémentaire (6), tel qu'un chauffage au bols, et/ou une pompe à chaleur, et les dissipateurs de chaleur sont formés par un échangeur thermique souterrain et/ou un échangeur thermique à l'air libre (7) et/ou un réservoir d'eau Industrielle (8) et/ou un appareil de chauffage d'un local (9).

18. Procédé de stockage de chaleur et/ou de production de chaleur avec un accumulateur à sorption selon l'une des revendications 1 à 14,
**caractérisé en ce que**
- au cours d'une première étape, l'énergie thermique, fournie par une source de chaleur (3, 6), en particulier telle que des capteurs solaires (3) et/ou un appareil de chauffage supplémentaire (6), tel qu'une chaudière au bois, et/ou une pompe à chaleur, est acheminée, en particulier par l'intermédiaire d'un échangeur thermique (21u, 21v, 21w, 21x) placé dans l'unité d'adsorption, vers les unités d'adsorption (21a, 21b, 21c, 21d), qui comportent un agent d'adsorption contenant un adsorbat ;
- au cours d'une deuxième étape, en raison de l'énergie thermique acheminée vers l'unité d'adsorption, l'adsorbat est libéré par désorption à partir de l'agent d'adsorption, et
- au cours d'une troisième étape, l'adsorbat gazeux est condensé, le condensât est recueilli et l'énergie thermique générée à cet effet est acheminée vers un dissipateur de chaleur (7, 8, 9), tel qu'un réservoir d'eau industrielle (8), un appareil de chauffage d'un local (9) et/ou un échangeur thermique souterrain et/ou un échangeur thermique à l'air libre (7).

19. Procédé selon la revendication 18,
**caractérisé en ce que**
- au cours d'une quatrième étape, le condensat s'évapore et l'adsorbat gazeux est acheminé vers l'unité d'adsorption,
- au cours d'une cinquième étape, l'adsorbat est adsorbé par l'unité d'adsorptîon et de l'énergie thermique se dégage alors ; et
- l'énergie thermique dégagée est acheminée par l'intermédiaire d'un échangeur thermique vers le dissipateur de chaleur, en particulier tel qu'un appareil de chauffage d'un local et/ou un réservoir d'eau industrielle.
